# EUROPEAN PATENT SPECIFICATION

(11) **EP 3 764 049 B1**
(45) Date of publication and mention of the grant of the patent: **05.10.2022**
(21) Application number: 20184890.0
(22) Date of filing: 09.07.2020
(51) Int. Cl.: F28F 1/32

(54) **FIN WITH IMPROVED RESISTANCE AND ASSOCIATED HEAT EXCHANGER**
VERSTÄRKTE RIPPE UND WÄRMETAUSCHER DAMIT
AILETTE RENFORCÉE ET ÉCHANGEUR DE CHALEUR ASSOCIÉ

(30) Priority: 12.07.2019 IT 201900011568
(43) Date of publication of application: 13.01.2021
(73) Proprietor: Air Hex Alonte S.r.l., 21040 Uboldo - Varese (IT)
(72) Inventor: Zapparoli, Paolo, 21040 UBOLDO - VARESE (IT)
(74) Representative: Rastelli, Franco

(56) References cited:
- EP-A1- 1 028 303
- EP-A1- 2 280 237
- FR-A- 1 602 080
- FR-A1- 2 138 417
- US-A- 1 752 879
- US-A- 4 067 384
- US-A- 4 592 420

## Description

### BACKGROUND OF THE INVENTION

The present invention relates to an improved resistance fin and associated heat exchange battery.

An air-based heat exchanger includes:
- a series of pipes, distributors (collectors) and bends inside which flows a fluid, which could be water, water and antifreeze, coolant, oil, etc.;
- a matrix of fins which, when fixed to the pipes, create the secondary surface of the exchanger that is put in contact with a fluid which is generally ambient air;
- a frame that accommodates the above-mentioned components.

This assembly, called for example "battery", "finned pack", "coil", etc., can be inserted in a product called "air-based heat exchanger" when placed alongside other components such as electric fans, casings, electrical accessories, etc.

The fins are normally produced from a roll of metal tape, the so-called coil, for example of aluminum, by straightening, punching and cutting to form a matrix of fins parallel to each other inside which the pipes are inserted.

Nowadays longer-lasting heat exchange batteries are in demand on the market and can be installed in more chemically aggressive environments, having greater mechanical strength to avoid damage caused by careless handling or poor installation, or to prevent damage caused during cleaning of the exchanger.

In addition, the constant market trend is to invest as little as possible in this component.

Current manufacturing technology produces fins that have the following drawbacks:
- they have cut edges, not protected by a surface treatment (epoxy or urethane), if present;
- they are rather weak in the cleaning process;
- they are affected by the phenomenon of abrasion when they are installed and operating in the presence of dusty air, containing sand or solid particles in general.

These limits are currently remedied with expensive solutions such as:
- painting the entire battery through a process generally of spraying or carried out as a kind of washing; this expensive solution also involves costs of transport to specialist companies and production stoppages with longer battery production times for treatment, drying and general logistics;
- painting only the thick edge by hand with a roller, in which case it is impossible to check the quality of the coating and repeatability and durability are both poor;
- increasing the thickness of the fins, causing an increase in the cost of the fin that is almost proportional to its thickness and running up against productivity limits in case of high thicknesses, for instance limits due to press size (tonnage), material availability or structural limits of the product;
- using harder and more resistant materials which, as in the previous case, can run up against limits of the press or suppliers and certainly lead to an increase in costs and lesser competitiveness of the product.

Added to the previous negative aspects is the environmental impact in the case of painting (pollution) and the cost in energy terms of producing fins of greater thickness or of more noble material.

Publication FR 1 602 080 A discloses fins for heat exchangers, whose edges have a fold in order to give the fin body the required rigidity. However, this known solution has the drawback of exposing the cut edges of the fins, i.e. those edges that have not been subjected to pre-treatment with protective material, to the damages caused by using the exchanger in industrial environments in the presence of aggressive substances.

US 4 067 384 A relates to a heat exchanger core assembly, provided with a multiplicity of parallel heat transfer fins having overturned leading edges.

### SUMMARY OF THE INVENTION

The object of the present invention is to provide an improved resistance fin and an associated heat exchange battery which solve the above-mentioned drawbacks.

Another object of the present invention is to provide a fin that does not need any traditional pre-treatment to protect the edges of the fins that have undergone cutting operations.

These objects according to the present invention are achieved by producing an improved resistance fin and an associated heat exchange battery as set out in the independent claim 1.

Further characteristics are provided in the dependent claims.

The fin according to the invention offers the advantage of not requiring protective pre-treatment of the cut edges. In fact, according to the invention, the closing and pressing of these cut edges inside the double fold of the edges of the fin itself, ensures the desired protection, even when no preventive protective treatment is provided against aggressive agents.

### BRIEF DESCRIPTION OF THE DRAWINGS

The characteristics and advantages of an improved resistance fin and associated heat exchange battery according to the present invention will be more evident from the following description, given by way of example and without limitation, referring to the attached schematic drawings, in which:
- Figure 1 is a schematic view of a heat exchange battery;
- Figure 2 shows a portion of a battery having fins according to the prior art, viewed from above;
- Figure 3 shows a portion of a battery having improved resistance fins according to the invention, viewed from above;
- Figure 4 shows an enlarged detail of Figure 3.

### DESCRIPTION OF THE PREFERRED EMBODIMENTS

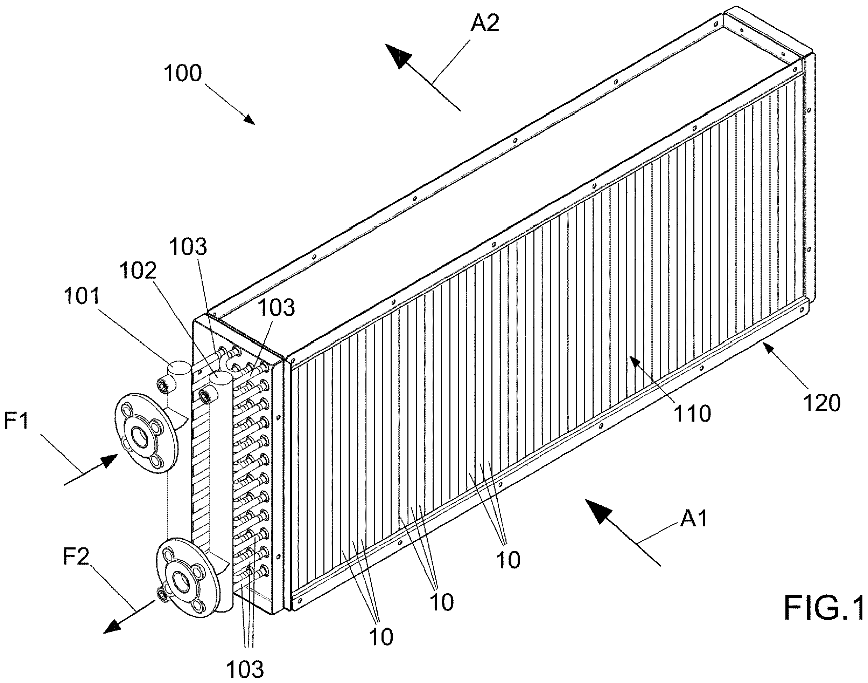

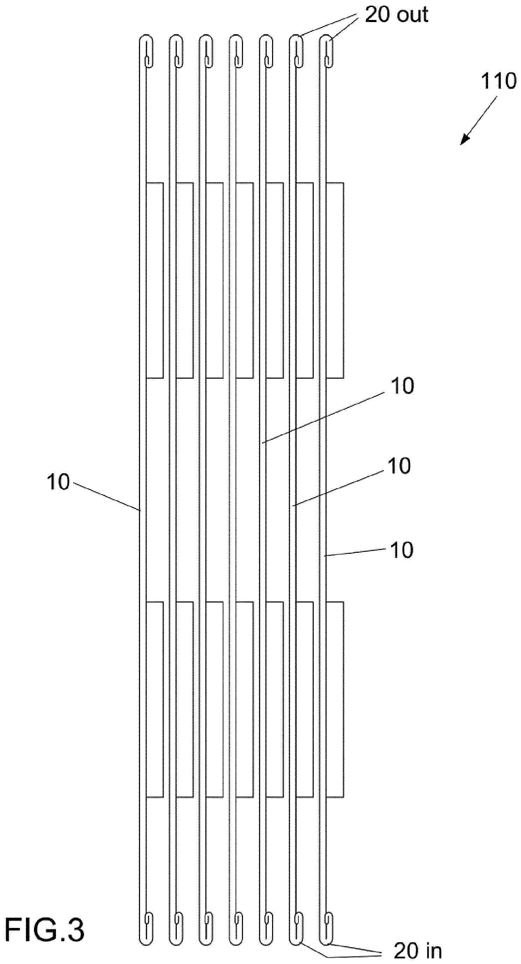

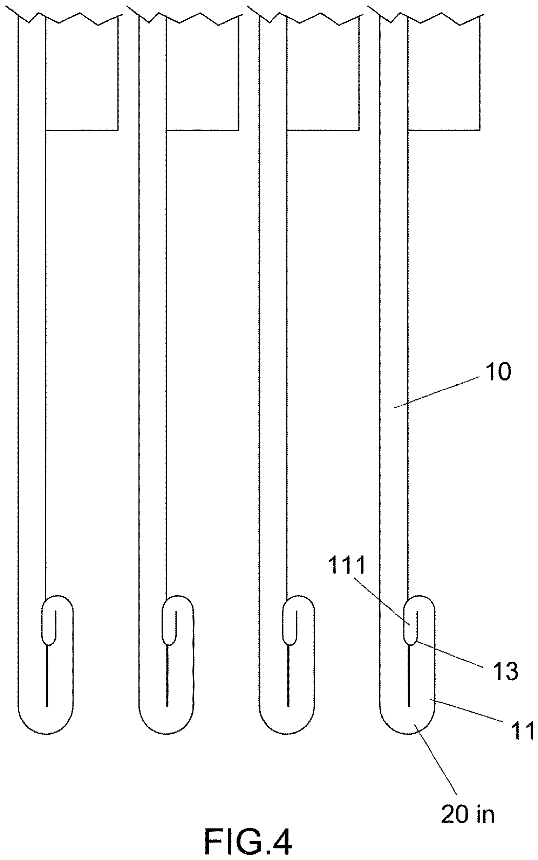

With reference to Figures 3 and 4, an improved resistance fin 10 is shown, suitable for being inserted in a heat exchange battery 100, shown schematically in Figure 1.

The heat exchange battery 100 comprises an inlet manifold 101 of a first fluid such as water, water and antifreeze, coolant, or oil, an outlet manifold 102 of the first fluid, a series of pipes 103 connected to the two manifold 101 and 102, a matrix 110 of parallel fins 10 which, when fixed to the pipes 103, create the secondary surface of the exchanger that is put in contact with a second fluid generally consisting of ambient air, and a frame 120, to which the upper and lower opposite edges of the fins 10 are fixed and which encloses the above-mentioned components.

Figure 1 shows with arrows F1 and F2 the direction of entry and exit of the first fluid in the battery 100, and with arrows A1 and A2 the direction of entry and exit of the second fluid, i.e. the air, in the battery 100.

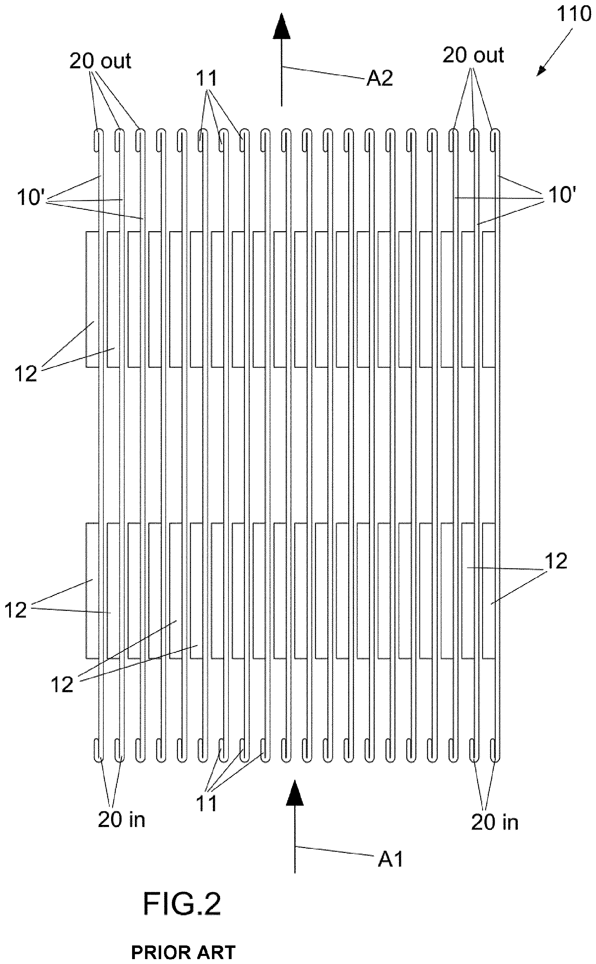

Figures 2 and 3 show battery portions made according to a simplified embodiment suitable for accommodating two pipes only passing through hollow collars 12. It is understood that the pipes passing through the battery 100 can be of any number and that the fins 10,10' will be provided with a corresponding number of collars 12 according to known techniques.

Unlike the fins 10' made according to the prior art, shown in Figure 2, the improved resistance fin 10, according to the preferred embodiment of the present invention, as illustrated in Figures 3 and 4, has at least both its opposite edges 20in and 20out of rounded shape, each formed by a double fold, having the external flap 11 of the fin 10 folded on itself and above an internal flap 111, which contains the cut edge 13 of the fin 10 and is in turn arranged flattened between the latter and the external flap 11 itself.

The length of the internal flap 111 is advantageously shorter than that of the external flap 11, essential for the invention being the arrangement of the cut edge 13 of the fin 10 inside the double fold formed by the folding of the external flap 11 on the body of the same fin 10 and by the folding of the internal flap 111 on the body of the external flap 11.

The rounded edges 20in and 20out constitute the front entry edge and the rear exit edge of the heat exchange battery 100.

According to the preferred embodiment of the invention, both the rounded opposite edges 20in and 20out have flaps 11 and 111 folded on the same side of the fin 10. For simplicity of construction, the flaps 11 and 111 are folded on the same side of the fin 10, as shown in the figures, but it is also possible to make them on opposite sides depending on the process used to produce the fin.

In particular, according to a simplified version of the invention, at least the entry edge 20in must have a rounded shape to reduce turbulence in the air entry area of the battery 100 and to facilitate the entry of air between the fins.

Each folded flap 11,111 is pressed in perfect adherence to the body of the fin 10.

The surfaces of the fin 10 and of the folded flaps 11,111 arranged side by side are pressed in adherence, to form a double fold inside which the cut edge 13 of the fins 10, formed on the end of the second folded flap 111, is accommodated and is protected from the action of aggressive substances, even in the absence of any pre-treatment.

The described double folding system of the flaps 11 and 111 of the fin according to the invention offers the advantage of increasing the mechanical strength and ensuring that the fins 10 are perfectly parallel and stable in that position. Therefore, the rounded edge 20in, 20out of the fin according to the invention is produced by the folding of the external flap 11 on the body of the fin 10 and the folding of the internal flap 111 on the external flap 11. In this way the internal flap 111 is arranged pressed between the fin 10 and the external flap 11, with a substantially parallel arrangement between these parts.

The improved resistance fins 10 according to the invention are made of metal tape, which can be either provided with an anti-corrosion pre-treatment or not, and having a thickness, for example, greater than or equal to 0.9 mm.

The best solution to reduce times and handling of the fin 10 in production is to insert the tool to carry out the folding process in the press that forms the fin from metal tape. Alternatively, it could also be performed outside the press.

The improved resistance fin 10 according to the invention must have rounded edges free of surface defects, such as cracks, and free from corrosion greater than that which could occur in areas not subject to the folding process.

This can be verified for example with a check (under a microscope) of the surface after processing to verify the absence of surface damage and, if a fin pre-treated against corrosion is used (generally epoxy or urethane treatments), through a saline fog test.

The presence of cracks and surface defects is an indication that the chosen base material is not suitable for processing and if it was pre-painted there would be an additional aggravating factor given the risk of detachment and/or breaking with the consequent risk of leaving the area "uncovered" and subject to possible corrosion.

The improved resistance fin and the associated heat exchange battery according to the present invention have the advantage of optimizing the resistance to corrosion. In fact, in the case of use of a traditional pre-treated fin, in the front area of the battery where the air enters, the traditional fin has its cut (without pre-treatment); the base material therefore undergoes the corrosion process which leads to the double effect of erosion of the substrate and detachment of the treatment film (without the substrate, the treatment film becomes detached and contributes to obstructing the air passage).

On the contrary, in the fin 10 according to the invention, the pressing of the internal flap 111 between the body of the fin 10 and the external flap 11 generates a double fold, inside which the cut edge 13 of the fin 10 is closed and isolated from the external environment, thus preventing contact with the surrounding aggressive substances capable of damaging it.

Furthermore, the rounded, crack-free entry edge 20in is already protected by the surface treatment which is carried out directly on the pre-treated metal tape from which the fin is produced. A surface treatment of the battery or solely of its edge is therefore superfluous. In this case, it will be sufficient to select and purchase a pre-treated tape suitable for the processing.

Another advantage of the fin according to the invention, with or without pre-treatment, is that of mechanically reinforcing the edge, for cleaning purposes or to better resist abrasion when installed in dusty or sandy environments.

Another advantage consists in all cases, with or without pre-treatment, in the possibility of providing a fin of lesser thickness or made of a less resistant/expensive material, and cheaper than the solution normally used. This is because the reinforced edge gives to each fin a higher mechanical strength.

Advantageously, the rounded edges mean that injuries are avoided in case of accidental contact.

In practice, any materials may be used, and be of any dimensions, depending on the technical requirements.

## Claims

1. Improved resistance fin (10) for a heat exchange battery (100), at least one front entry edge (20in) of said fin having a rounded shape and being formed by a double fold, **characterized in that** said double fold encloses the cut edge (13) of the fin (10), in such a way as to close it and isolate it from the external environment and to prevent it from coming into contact with aggressive substances capable of damaging it.

2. Fin according to claim 1, **characterized in that** the aforementioned double fold is formed by an external flap (11) of the fin (10) folded upon itself and above an internal flap (111), which contains the cut edge (13) of the fin (10) and is in turn arranged pressed between the latter and the external flap (11) itself.

3. Fin according to claim 2, **characterized in that** at least one opposite rear exit edge (20out) also has a rounded shape and is formed by an external flap (11) of the fin (10) folded upon itself and above an internal flap (111), which contains the cut edge (13) of the fin (10) and is in turn arranged pressed between the latter and the external flap (11) itself.

4. Fin according to claim 3, **characterized in that** said rounded opposite edges (20in and 20out) have flaps (11,111) folded on the same side of the fin (10).

5. Fin according to claim 3, **characterized in that** said rounded opposite edges (20in and 20out) have flaps (11,111) folded on opposite sides of the fin (10).

6. Fin according to any one of the preceding claims, **characterized in that** said folded internal flaps (111) are pressed in adherence between the surface of the fin (10) and the corresponding external flaps (11) folded upon the latter.

7. Fin according to claim 6, **characterized in that** the pressed surfaces of said flaps (11,111) and fin (10) are parallel to each other.

8. Fin according to any one of the preceding claims, **characterized in that** it is made of pre-treated metal tape.

9. Heat exchange battery (100) comprising an inlet collector (101) of a first fluid, an outlet collector (102) of the first fluid, a series of pipes (103) connected to the two collectors (101, 102), a matrix (110) of parallel fins fixed to the pipes (103) forming a secondary exchange surface in contact with a second fluid, and a frame (120), to which opposite upper and lower edges of the fins are fixed, **characterized in that** said fins are improved resistance fins (10) according to any one of the preceding claims.

## Patentansprüche

1. Lamelle (10) mit verbessertem Widerstand für eine Wärmeaustauschbatterie (100), wobei mindestens eine vordere Eingangskante (20in) der Lamelle eine abgerundete Form aufweist und durch eine doppelte Faltung gebildet ist, **dadurch gekennzeichnet, dass** die doppelte Faltung die Schnittkante (13) der Lamelle (10) in einer derartigen Weise umgibt, dass sie sie schließt und von der externen Umgebung isoliert und dass sie verhindert, dass sie mit aggressiven Substanzen in Kontakt kommt, die sie beschädigen können.

2. Lamelle nach Anspruch 1, **dadurch gekennzeichnet, dass** die zuvor erwähnte doppelte Faltung durch eine externe Klappe (11) der Lamelle (10) gebildet ist, die auf sich selbst und über eine interne Klappe (111) gefaltet ist, die die Schnittkante (13) der Lamelle (10) umfasst und wiederum zwischen Letztere und die externe Klappe (11) selbst gepresst angeordnet ist.

3. Lamelle nach Anspruch 2, **dadurch gekennzeichnet, dass** mindestens eine gegenüberliegende hintere Ausgangskante (20out) auch eine abgerundete Form aufweist und durch eine externe Klappe (11) der Lamelle (10) gebildet ist, die auf sich selbst und über eine interne Klappe (111) gefaltet ist, die die Schnittkante (13) der Lamelle (10) umfasst und wiederum zwischen Letztere und die externe Klappe (11) selbst gepresst angeordnet ist.

4. Lamelle nach Anspruch 3, **dadurch gekennzeichnet, dass** die abgerundeten gegenüberliegenden Kanten (20in und 20out) Klappen (11, 111) aufweisen, die auf der gleichen Seite der Lamelle (10) gefaltet sind.

5. Lamelle nach Anspruch 3, **dadurch gekennzeichnet, dass** die abgerundeten gegenüberliegenden Kanten (20in und 20out) Klappen (11, 111) aufweisen, die auf gegenüberliegenden Seiten der Lamelle (10) gefaltet sind.

6. Lamelle nach einem der vorhergehenden Ansprüche, **dadurch gekennzeichnet, dass** die gefalteten internen Klappen (111) übereinstimmend zwischen die Fläche der Lamelle (10) und die entsprechenden externen Klappen (11), die auf Letztere gefaltet sind, gepresst sind.

7. Lamelle nach Anspruch 6, **dadurch gekennzeichnet, dass** die gepressten Flächen der Klappen (11, 111) und die Lamelle (10) parallel zueinander sind.

8. Lamelle nach einem der vorhergehenden Ansprüche, **dadurch gekennzeichnet, dass** sie aus einem vorbehandelten Metallband hergestellt ist.

9. Wärmeaustauschbatterie (100), umfassend einen Einlasssammler (101) eines ersten Fluids, einen Auslasssammler (102) des ersten Fluids, eine Reihe von Rohren (103), die mit den zwei Sammlern (101, 102) verbunden sind, eine Matrix (110) aus parallelen Lamellen, die an den Rohren (103) befestigt sind, die eine zweite Austauschfläche in Kontakt mit einem zweiten Fluid bilden, und einen Rahmen (120), an dem gegenüberliegende obere und untere Kanten der Lamellen befestigt sind, **dadurch gekennzeichnet, dass** die Lamellen Lamellen (10) mit verbessertem Widerstand nach einem der vorhergehenden Ansprüche sind.

## Revendications

1. Ailette renforcée (10) pour batterie à échange de chaleur (100), au moins un bord d'entrée avant (20in) de ladite ailette ayant une forme arrondie et étant formée par un double pli, **caractérisée en ce que** ledit double pli renferme le bord de coupe (13) de l'ailette (10) de manière à la fermer et à l'isoler de l'environnement externe et à l'empêcher de venir en contact avec des substances agressives capables de l'endommager.

2. Ailette selon la revendication 1, **caractérisée en ce que** le double pli précité est formé par un volet externe (11) de l'ailette (10) replié sur lui-même et au-dessus d'un volet interne (111) qui contient le bord de coupe (13) de l'ailette (10) et est à son tour disposé comprimé entre cette dernière et le volet externe (11) lui-même.

3. Ailette selon la revendication 2, **caractérisée en ce qu'**au moins un bord de sortie arrière opposé (20out) a aussi une forme arrondie et est formé par un volet externe (11) de l'ailette (10) replié sur lui-même et au-dessus d'un volet interne (111) qui contient le bord de coupe (13) de l'ailette (10) et est à son tour disposé comprimé entre cette dernière et le volet externe (11) lui-même.

4. Ailette selon la revendication 3, **caractérisée en ce que** lesdits bords opposés arrondis (20in et 20out) ont des volets (11, 111) pliés du même côté de l'ailette (10) .

5. Ailette selon la revendication 3, **caractérisée en ce que** lesdits bords opposés arrondis (20in et 20out) ont des volets (11, 111) pliés sur des côtés opposés de l'ailette (10).

6. Ailette selon l'une quelconque des revendications précédentes, **caractérisée en ce que** lesdits volets internes pliés (111) sont comprimés en adhérence entre la surface de l'ailette (10) et les volets externes correspondants (11) repliés sur celle-ci.

7. Ailette selon la revendication 6, **caractérisée en ce que** les surfaces comprimées desdits volets (11, 111) et de l'ailette (10) sont parallèles les unes aux autres.

8. Ailette selon l'une quelconque des revendications précédentes, **caractérisée en ce qu'**elle est composée d'une bande métallique prétraitée.

9. Batterie à échange de chaleur (100) comprenant un collecteur d'admission (101) d'un premier fluide, un collecteur d'évacuation (102) du premier fluide, une série de tuyaux (103) connectés aux deux collecteurs (101, 102), une matrice (110) d'ailettes parallèles fixées aux tuyaux (103) formant une surface d'échange secondaire en contact avec un second fluide, et un cadre (120) auquel les bords opposés supérieurs et inférieurs des ailettes sont fixés, **caractérisée en ce que** lesdites ailettes sont des ailettes renforcées (10) selon l'une quelconque des revendications précédentes.
